(19) Europäisches Patentamt
European Patent Office
Office européen des brevets

(11) Numéro de publication: **0 220 997 B1**

(12) # FASCICULE DE BREVET EUROPÉEN

(45) Date de publication du fascicule du brevet: **12.10.88**

(51) Int. Cl.⁴: **B 65 D 77/20**, C 09 K 3/10

(21) Numéro de dépôt: **86420235.3**

(22) Date de dépôt: **18.09.86**

(54) **Procédé d'emballage pour articles alimentaires et notamment de plats cuisinés, assurant une longue durée de conservation à température ambiante.**

(30) Priorité: **24.09.85 FR 8514307**

(43) Date de publication de la demande: **06.05.87 Bulletin 87/19**

(45) Mention de la délivrance du brevet: **12.10.88 Bulletin 88/41**

(84) Etats contractants désignés: **AT BE CH DE GB IT LI LU NL SE**

(56) Documents cité:
**EP-A-0 011 588**
**DE-A-3 200 035**
**US-A-4 220 342**
**US-A-4 469 258**

(73) Titulaire: **RHONE- POULENC FILMS, 25, quai Paul Doumer, F-92408 Courbevoie (FR)**

(72) Inventeur: **De Leiris, Jean- Pierre, 1, Rue du Général de Larminat, F-94000 Creteil (FR)**
Inventeur: **Merceret, Philippe, 62, rue Brancion, F-75015 Paris (FR)**

(74) Mandataire: **Rioufrays, Roger, RHONE- POULENC INTERSERVICES Service Brevets Chimie Centre de Recherches de Saint- Fons B.P. 62, F-69192 Saint- Fons Cédex (FR)**

**EP 0 220 997 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

La présente invention concerne un procédé d'emballage d'articles alimentaires et de plats cuisinés par scellage étanche d'un récipient contenant l'article alimentaire ou le plat cuisiné avec un couvercle, par l'intermédiaire d'un joint adhérent fermement au récipient et au couvercle. Cette opération sera par la suite désignée par l'appellation bien connue d'operculage.

L'invention concerne également les articles constitués par un emballage scellé selon l'invention et contenant les articles alimentaires ou les plats cuisinés.

On connait déjà des emballages scellés pour articles alimentaires ou plats cuisinés obtenus par scellage d'un couvercle sur les bords d'un récipient, les bords étant en aluminium ou en verre, ou encore recouverts d'une couche thermoplastique éventuellement thermoscellable. Le scellage peut être fait, selon la nature des matériaux à sceller, par des traitements d'ultrasons, par des traitements thermiques notamment dans le cas où les matériaux possèdent la proprieté de thermoscellabilité, ou encore par dépose d'un joint unissant de manière étanche et adhérente les bords du récipient et le couvercle.

L'invention se situe plus précisément dans le domaine où les bords du récipient à operculer sont recouverts d'un film thermoplastique, le scellage étant assuré par l'intermédiaire d'un joint étanche. En sait que dans le domaine de l'emballage d'articles alimentaires, le joint doit répondre simultanément à de nombreuses exigences telles que:

- facilité de mise en oeuvre,
- possibilité d'utilisation sur des machines à haute vitesse,
- caractère alimentaire du joint de scellage,
- étanchéité aux gaz et aux liquides ainsi qu'aux bactéries pour un emballage de longue conservation,
- caractère élastomèrique des joints notamment avec un bas module.

Ainsi dans la demande de brevet allemand 3 009 007, on trouve décrit un procédé d'operculage mettant en jeu un adhésif à froid déposé sur les bords du récipient à sceller et mis en contact et pressé avec un couvercle lui-même porteur, sur sa périphérie, du joint de l'adhésif "à froid". L'adhésif apparaît être une résine polymérique déposée sous forme de dispersion aqueuse.

Dans le brevet américain 4 032 492 est décrite une composition hot melt permettant de faire adhérer un couvercle sur les bords d'un récipient à usage alimentaire; la colle hot melt est constituée d'un mélange de paraffine, de copolymère élastomérique, d'huile hydrocarbonée, de résine thermoplastique contenant des unités vinylarènes et d'une faible quantité d'huile silicone. L'emploi de cette composition permet au joint d'avoir des bonnes propriétés d'étanchéité, d'adherence, de résistance chimique et d'aptitude à la déformation.

Une difficulté supplémentaire est rencontrée dans le cadre de l'utilisation de récipients obtenus directement par emboutissage de feuilles plastiques déformables pouvant être facilement transformées en récipients avec fond, côtés dressés et bords et ayant une certaine rigidité (résistance à la déformation). On observe, en général en examinant le récipient, la présence de fines pliures dans les parties raccordant entre elles deux côtés adjacents dressés au-dessus du fond. Ces pliures constituant de fines rayures se retrouventé galement sur la partie des bords raccordant les divers bords portés par les côtés, en général linéaires, du récipient; la présence de ces pliures constitue une source de difficultés car il n'est pas facile d'assurer après operculage une étanchéité du récipient à l'endroit des fines rayures, compte tenu de la non planéité à cet endroit des bords allant recevoir le joint de scellage.

L'invention répond précisément à ce but: il a été trouvé, et c'est ce qui constitue l'objet de la présente invention, un procédé d'emballage d'articles alimentaires et de plats cuisinés permettant d'assurer une longue conservation à température ambiante et consistant:

- à placer l'article alimentaire éventuellement cuisiné dans un récipient dont les bords sont revêtus du côté à sceller d'une couche en matière thermoplastique à base d'un film étiré ou non
- à déposer sur les bords du récipient et/ou du couvercle une composition transformable en un joint élastomérique adhérent aux matières thermoplastiques
- à mettre en place le couvercle au-dessus du récipient et à procéder à l'operculage sous l'effet d'une légère pression faisant adhérer le joint élastomerique avec le couvercle et le récipient

le procédé étant caractérisé en ce qu'on utilise, en tant que composition pour joint, une composition silicone adhérent aux matières thermoplastiques.

Les compositions silicones utilisables sont généralement des compositions organopolysiloxaniques durcissables sous forme de matériaux élastomériques ou résineux, soit à température ambiante ou à température plus élevée (jusqu'à 200°C); ces compositions sont adhérentes sur les matériaux thermoplastiques (polyoléfine, polyester ...), soit par leur nature même (caractère d'auto-adhérence), soit par addition préalable d'un primaire sur le revêtement à sceller.

**A - Compositions organopolysiloxaniques monocomposantes**

Les compositions peuvent être monocomposantes, c'est-à-dire qu'elles sont stables au stockage en l'absence d'humidité et durcissent en présence de cette dernière; la vulcanisation peut être accélérée par addition d'un agent apportant de l'eau ou libérant de l'eau, par exemple lors de réactions avec des composés présents au sein de la composition; on peut ajouter ainsi des hydroxydes alcalins ou des phosphates hydratés (brevets français 2 540 128, 2 540 129); les compositions organopolysiloxaniques mises en oeuvre, les divers constituants possibles sont décrits dans de nombreux brevets et notamment dans les brevets français 2 393 831, 2 405 985...

**B - Compsitions organopolysiloxaniques bicomposantes**

B1 - Composition organopolysiloxaniques bicomposantes durcissables par polyaddition (hydrosilylation)

Il peut tout d'abord s'agir de compositions durcissant par polyaddition, c'est-à-dire par réaction de groupements hydrogénosilylés sur des groupements silylés porteurs d'insaturation éthylénique; pour que ces compositions soient autoadhérentes il est nécessaire qu'elles comportent des agents organosiliciques d'adhérence bien connus en ce domaine et tels que des silanes porteurs de groupements liés à l'atome de silicium, du type éthylénique, alkoxyle, acryloxylalkyle, méthacroyloxyle, alkyle (voir par exemple brevet français 2 474 519, brevet américain 4 196 273); ces compositions comportent également un catalyseur de la réaction d'hydrosilylation (platine, dérivé ou complexe du platine ...)
De manière plus précise, la composition organopolysiloxanique pourra être constituée comme suit par:

(1) au moins un organopolysiloxane comportant par molécule au moins un radical vinyle, les autres radicaux étant des radicaux organiques mono- ou divalents n'exerçant pas d'influence défavorable sur l'activité catalytique.
(2) au moins un organohydrogénopolysiloxane renfermant au moins 3 atomes d'hydrogène liés aux silicium par molécule, les autres radicaux étant des radicaux organiques mono- ou divalents, de préférence exempts d'insaturation aliphatique et n'exerçant pas d'influece défavorable sur l'activité catalytique.
(3) un catalyseur qui est un complexe d'un métal du groupe du platine en quantité suffisante pour faire réagir (1) et (2).

Les autres radicaux portés par les atomes de silicium des polysiloxanes peuvent être choisis parmi tous les radicaux connus à cet effet. Préférentiellement, ces radicaux peuvent être des radicaux alkyles ayant de 1 à 3 atomes de carbone (méthyle, éthyle, n-propyle) ou le radical phényle.
Eventuellement, la composition peut comprendre des charges permettant d'améliorer les propriétés mécaniques et/ou les propriétés d'imperméabilité au gaz, des ingrédients divers (antifongique, bactéricide ...) ainsi qu'un agent inhibiteur et pouvant par exemple être choisi parmi tous les composés connus à cet effet et notamment les composés tels que le myrcène ou ses dérivés, les $\beta$ chlorocétones acétyléniques, les alcools tertiaires acétyléniques, les maléates de triorganosilyle.

B2 - Compositions bicomposantes durcissant par polycondensation

Les compositions polysiloxaniques peuvent être également des compositions bi-composantes durcissant par polycondensation à température ambiante, et dont la condensation peut être accelérée par chauffage. Ces compositions comprennent généralement:

a) un polydiorganopolysiloxane $\alpha,\omega$ dihydroxylé dont la viscosité varie de 500 mPa.s à 25° C à 500.000 mPa.s et constitué essentiellement de motifs diorganosiloxy [$(R_2)SiO$] pouvant comprendre à raison d'au plus 1 % d'autres groupements généralement présents à titre d'impuretés tels que $RSiO_{3/2}$, $(R)_3SiO_{1/2}$ et $SiO_{4/2}$ R pouvant être choisi parmi les radicaux connus à cet effet, comme par exemple les radicaux alkyles ayant de 1 à 3 atomes de carbone (méthyle, éthyle, n-propyle), le radical vinyle, le radical phényle, le radical trifluoropropyle.
Avantageusement, au moins 60 % de l'ensemble des radicaux R sont des radicaux méthyle, au plus 1 % sont des radicaux vinyles.
b) un agent réticulant $R_{4-a}SiY_a$ R ayant la signification préalablement donnée, a étant un nombre égal à 3 ou 4, Y représentant un groupe hydrolysable ou condensable. Comme exemple d'agents réticulants on utilisera avantageusement les polyalkoxysilanes et en particulier ceux de formule:

$Si(OC_2H_5)_4$; $Si(O\text{-}n\text{-}C_3H_7)_4$;
$Si(O\text{-}isoC_3H_7)_4$; $Si(OC_2H_4OCH_3)_4$;
$CH_3Si(OCH_3)_3$; $CH_2=CHSi(OCH_3)_3$;

$CH_3Si(OC_2H_4OCH_3)_3$; $CH_2ClSi(OC_2H_5)_3$;
$CH_2{=}CHSi(OC_2H_4OCH_3)_3$

A tout ou partie des agents réticulants ci-dessus on peut substituer des polyalcoxypolysiloxanes dont chaque molécule compte au moins deux, de préférence trois groupes hydrolysables, les autres valences du silicium étant satisfaites par des liaisons siloxaniques SiO- et SiR. Comme exemples d'agents réticulants polymères on peut citer le polysilicate d'éthyle.

c) un catalyseur choisi parimi:

C.1) les sels d'étain, de fer, d'acides carboxyliques tels que l'éthyl-2 hexanoate, le stéarate, l'oléate, le naphtenate d'étain, de fer.

C.2) des sels d'organoétains d'acides carboxyliques tels que le diacétate et le dilaurate de di(n-butyl)étain, le diacétate et le dilaurate de di(n-octyl)étain, le di(éthyl-2 hexanoate) de diméthylétain, le diversatate de di(n-butyl)étain, le succinate de di(n-octyl)étain, le maléate de di(n-octyl)étain.

C.3) des chélates d'étain de formule

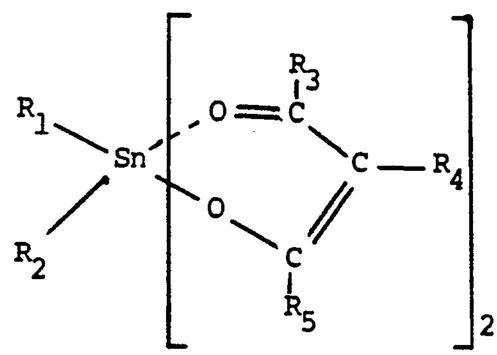

dans laquelle:

les radicaux $R_1$ et $R_2$ identiques ou différents représentent un radical alkyle en $C_1$-$C_{12}$, un radical alcoxy en $C_1$-$C_{12}$, un radical alcényle en $C_1$-$C_{12}$, un radical acyle en $C_1$-$C_{12}$, un radical acyloxy en $C_1$-$C_6$, un radical cycloalkyle éventuellement halogéné en $C_5$-$C_8$, un radical aryle mononucléaire éventuellement halogéné, un radical arylalkyle mononucléaire dont la partie alkyle est en $C_1$-$C_4$, $R_1$ et $R_2$ étant différents de l'atome d'hydrogène.

$R_3$ et $R_5$ identiques ou différents sont choisis parmi l'atome d'hydrogène, un radical ne contenant pas plus de 8 atomes de carbone environ choisi parmi les radicaux alkyle, hologénoalkyle, cyanatoalkyle, alcoxy, halogénoalcoxy, cyanoalcoxy, aryle mononucléaire éventuellement halogéné et arylalkyle mononucléaire éventuellement halogéné dont la partie alkyle est en $C_1$-$C_4$.

$R_4$ choisi parmi l'atome d'hydrogène, un radical ne contenant pas plus de 8 atomes de carbone environ choisi parmi un radical alkyle, halogénoalkyle et aryle ou bien $R_4$ conjointement avec $R_5$, forme un radical hydrocarboné cyclique ne contenant pas plus de 12 atomes de carbone et éventuellement substitué par des radicaux chloro, nitro et cyano.

Les chélates d'étain selon l'invention sont des produits connus dont la préparation est décrite par exemple dans le brevet US 3 055 845

Les compositions contiendront, en outre, préférentiellement un agent favorisant l'adhérence tel qu'un mono ou un polyaminoalkylalkoxysilane comme par exemple les composés de formule:

$NH_2$-$(CH_2)_3$-Si-$(OC_2H_5)_3$;
$NH_2$-$(CH_2)_3NH$-$(CH_2)_3$-Si-$(OCH_3)_3$

Lorsque les compositions contiennent l'agent d'adhérence on peut lui ajouter une résine organopolysiloxanique choisie de préférence parmi celles formées des motifs $R_3SiO_{1/2}$ et $SiO_{4/2}$. De telles compositions sont par exemple décrites dans le brevet français 2 228 814.

B3 - Compositions organopolysiloxaniques adhésives par simple contact

Ces compositions comprennent le produit de réaction d'un diorganopolysiloxane α,ω dihydroxylée, avec une résine constituée de motifs $(CH_3)_3SiO_{1/2}$ et $SiO_{4/2}$. De telles compositions sont décrites par exemple dans le brevet français 2 128 941, le brevet belge 888 096 et le brevet américain 4 309 520. Ce sont des adhésifs qui ont un excellent comportement au vieillissement et à la chaleur.

L'invention permet notamment d'emballer, de manière étanche, des plats cuisinés dans des récipients dits barquettes comprenant un fond, plusieurs côtés adjacents dressés par rapport au fond et constituant une ceinture continue autour du fond. Les barquettes contiennent également un bord continu sensiblement parallèle au fond et permettant un assemblage continu du couvercle.

L'invention va permettre notamment l'utilisation de barquettes ayant éventuellement, sur certaines de leurs

surfaces et notamment dans les angles, des bords non entièrement plans et ces bords pouvant posséder des irrégularités de surface telles que des petites pliures, des fines rayures ...

Les barquettes sont elles-mêmes connues, et leur nature, leur nombre de côtés, le matériau dont elles sont constituées ne sont pas critiques, à condition comme on l'a déjà dit que les bords scellables soient revêtus, du côté à sceller, d'un film thermoplastique, amorpne ou monoétiré ou biétiré.

Avantageusement, les barquettes sont revêtues à l'intérieur et sur les bords d'un même revêtement therimoplastique. L'extérieur des barquettes est constitué par un matériau demeurant rigide après avoir été mis en forme de récipient. Avantageusement, ce matériau créant la paroi externe est un carton ou tout autre équivalent gardant sensiblement sa forme après la confection du récipient. L'emploi de carton ou de matériau similaire présente en outre d'autres avantages puisqu'on peut y imprimer des inscriptions diverses et/ou des dessins.

Dans le cadre de l'invention, on pourra utiliser des barquettes, obtenues à partir de feuilles composites d'emballage, constituées par un film plastique rendu solidaire d'un matériau assurant la rigidité du récipient après sa réalisation; préférentiellement, la feuille composite utilisée sera constituée par un film thermoplastique contre-collé sur un carton; le récipient sera réalisé selon les procédés conventionnels et notamment par emboutissage ou pliage, découpage et collage; préférentiellement, le film thermoplastique, qui doit avoir la qualité alimentaire durant les traitements thermiques auxquels il sera soumis, est à base de polyoléfine (polyéthylène, polypropylène), de polyester (polytéréphtalate d'éthylène glycol, polytérépntalate de tétraméthylene glycol ...).

Avantageusement, le film utilisé est un polytéréphtalate d'éthylène glycol qui assure une excellente résistance lors des traitements thermiques que subira l'emballage. Ce dernier permet notamment d'éviter tout risque de détérioration du plat cuisiné ou des aliments par les produits de dégradation de la matière thermoplastique, lors de la cuisson des articles alimentaires ou lors du réchauffage de ces derniers; ces opérations thermiques pourront être réalisées dans l'emballage après fermeture (cuisson) ou ouverture, ou encore réchauffage du plat.

Selon une variante de l'invention, on peut remplacer le revêtement thermoplastique porté par le récipient, (ou par les bords du récipient), par un revêtement composite constitué par un film ayant sur une de ses faces externes une couche thermoplastique et comportant d'autres couches habituellement mises en oeuvre dans le domaine des films complexes pour emballage [couche (s), barrière (s) aux gaz par exemple, à base de polymère éthylène-vinyle-acétate... couche métallique, couche d'adhérence ...]. Avantageusement, on utilisera un film métallisé tel qu'un polypropylène ou un polyester métallisé. Péférentiellement, on mettra en oeuvre un film métallisé (aluminium) de polytéréphtalate d'éthylène glycol et ceci pour les bonnes qualités des films de polyester métallisé. Si on désire assurer une très haute barrière vis-à-vis de l'oxygène ou de la vapeur d'eau, le film métallisé pourra être constitué par un assemblage de deux films thermoplastiques métallisés contrecollés entre eux.

Quant au couvercle, il est en général constitué par une feuille plastique simple ou complexe de nature analogue à celle portée par les bords du récipient du côté du scellage. Le couvercle peut ainsi être un film thermoplastique simple ou complexe ayant une couche telle que précédemment décrite, apte à être scellée de manière étanche avec un joint silicone tel que précédemment décrit; le couvercle pourra, le cas échéant, être une feuille plastique contrecollée sur du carton ou encore une feuille métallique telle qu'une feuille d'alumium et enfin une feuille composite comportant une feuille d'aluminium.

Le procédé, selon l'invention, consiste à déposer juste avant scellage, sur les bords du récipient et/ou sur les bords du couvercle un film peu épais de la composition silicone précédemment décrite. Le scellage est assuré par mise en contact du couvercle et du récipient en assurant, durant une courte période, une légère pression et éventuellement un court chauffage.

La cuisson des aliments peut être réalisée avant l'operculage ou après ce dernier, par tout procédé connu tel que l'autoclavage.

Le procédé, selon l'invention, est particulièrement intéressant puisqu'il permet de conserver, à température ambiante durant de nombreux mois, les plats cuisinés qui sont contenus à l'intérieur du récipient.

L'étanchéité qui est réalisée apparaît donc être satisfaisante vis-à-vis des liquides, des gaz et des bactéries.

Enfin l'invention concerne également les articles emballés obtenus selon le procédé précédemment décrit et contenant les articles alimentaires ou les plats cuisinés.

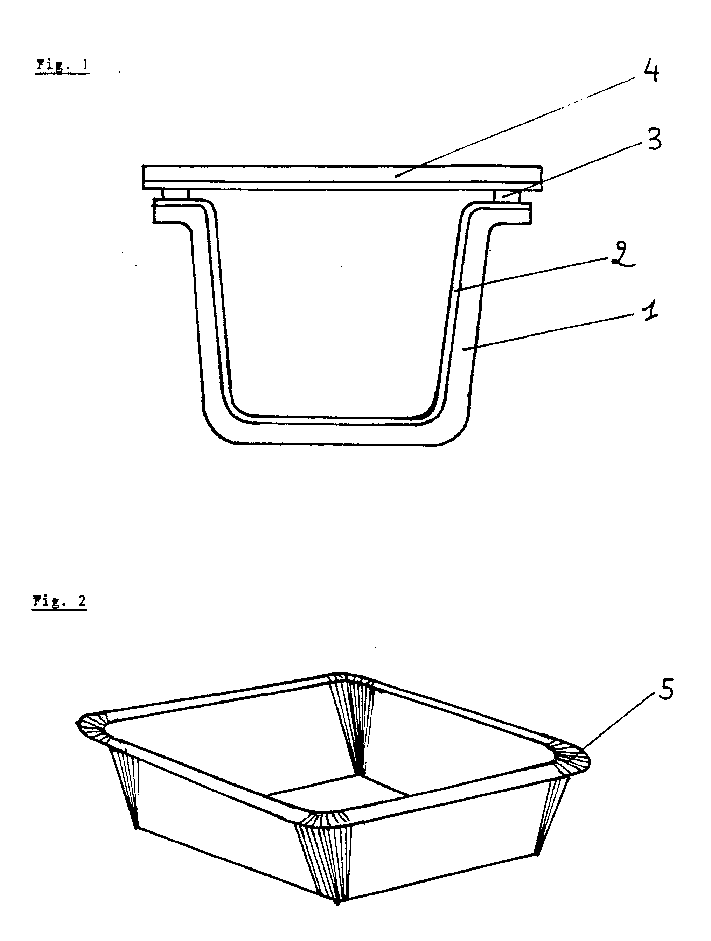

L'invention sera illustrée à l'aide des figures 1 et 2 montrant le scellage effectué sur une barquette de forme trapezoïdale et dont les bords ne sont pas entièrement plans (présence de fines rayures dans les angles).

La figure 1 représente une coupe du récipient d'emballage soellé avec son opercule (faite dans un plan de symétrie de l'emballage).

La figure 2 représente en perspective une barquette destinée à confectionner l'emballage de l'invention; les figures 1 et 2 ne sont pas faites à une échelle déterminée.

Sur la figure 1, on remarque le carton 1, le film polyester 2, le joint siliconé 3 et le couvercle 4.

La figure 2 permet d'observer la présence de petites rayures 5 très fines dans les angles des bords du récipient.

La barquette utilisée a un fond rectangulaire à angles arrondis ayant sensiblement, pour dimension 12 x 13 cm, sa profondeur est de 4,5 cm; les bords sont sensiblement horizontaux et ont une largeur de 0,5 cm; ils

entourent, dans le même plan, une base rectangulaire à angles arrondis ayant sensiblement pour dimensions 15 x 17 cm.

**Exemple 1**

Le procédé de l'invention est réalisé sur des parquettes telles que décrites sur les figures 1 et 2. Le couvercle est un matériau de même nature que celui de la barquette: il s'agit d'un polytéréphtalate d'éthylèneglycol métallisé aluminium et contrecollé carton.

Sur les bords de la barquette dont les dimensions viennent d'être définies, on dépose à l'aide d'une macnine automatique un cordon d'environ 0,5 cm de large correspondant sensiblement à 3 g par mètre linéaire de joint, d'une composition silicone obtenue par mélange de:

| | |
|---|---|
| - huile de viscosité d'environ 90 000 cPo à 25° C de formule: $CH_2=CH(CH_3)_2Si[OSi(CH_3)_2]_nOSi(CH_3)_2CH=CH_2$ | 75 parties |
| - résine constituée de motifs $SiO_2$, $(CH_3)_3SiO_{0,5}$, $CH_3(CH_2=CH)SiO$ distribués respectivement dans le rapport numérique 3,5/2,3/0,4 | 25 parties |
| - résine constituée de motifs $SiO_2$ et $(CH_3)_2HSiO_{0,5}$ distribués respectivement dans le rapport numérique 1/2 | 6,2 parties |
| - silice de diatomées de diamètre particulaire 5 microns | 55 parties |
| - platine sous forme soluble dans l'alcool octylique | 0,002 parties |

préalablement à ce dépôt les bords du récipient ont été enduits au pinceau, puis séchés à l'aide de la composition suivante:

| | |
|---|---|
| - $\gamma$ aminopropyltriéthoxysilane | 5 parties |
| - vinyltriéhoxylsilane | 10 parties |
| - solution à 70 % dans du white-spirit® d'une résine polysiloxanique constituée de motifs $(CH_3)SiO_{1,5}$, $(CH_3)_2SiO(CH_3)_3SiO_{1/2}$ dans le rapport 1,35/0,4/0,1 | 10 parties |
| - méthanol | 75 parties |

On dépose un plat cuisiné (poulet avec du riz) dans la barquette et applique ensuite avec une légère pression le couvercle sur la barquette et fait passer l'emballage dans un four porté à 150° C (durée 20 s).

On constate une excellent conservation du plat cuisiné dans son emballage durant au moins 9 mois, à la température ordinaire.

**Exemple 2**

On reproduit l'exemple 1 en n'effectuant pas de traitement préalable à l'aide d'un primaire, mais en introduisant dans la composition 5 parties de méthacroyloxypropyltriméthoxysilane.

Les résultats de scellage et de conservation sont identiques à ceux de l'exemple 1.

**Exemple 3**

On effectue le scellage des barquettes en utilisant la composition organopolysiloxanique formée par le mélange de:

- 100 p d'une huile $\alpha,\omega$ dihydroxypolydiméthylpolysiloxanique de viscosité 2500 mPa.s à 25° C
- 50 parties d'une solution à 60 % d'une résine formée de motifs $(CH_3)_3SiO_{0,5}$ et $SiO_2$ réparties respectivement dans le rapport molaire 0,6 et ayant 2,5 % de radicaux OH
- 40 parties de quartz broyé de diamètre particulaire moyen 5 microns
- 5,5 parties d'un silane de formule: $(CH_3O)_3Si\text{-}(CH_2)_3NHCH_2NH_2$
- 11 parties d'un polysilicate d'éthyle titrant 40 % de silice

Les résultats de scellage et de conservation sont analogues à ceux décrits dans l'exemple 1.

**Exemple 4**

On ajoute 10 g du percarbonate de O-0-tertiobutyle et de o-isopropyle à une composition renfermant:

| | |
|---|---|
| - une huile (α,ω dihydroxy)diméthylpolysiloxanique de viscosité 1 000 000 cPo à 25 °C | 281 g |
| - une solution à 60 % en poids dans le toluène d'une résine formée de motifs $(CH_3)_3SiO_{0,5}$ et $SiO_2$ pris respectivement dans le rapport numérique 0,75/l | 531 g |
| - de toluène | 188 g |

l'ensemble est chauffé sous pression réduite de manière à atteindre, après élimination de la plus grande partie du toluène, une température dans la masse de 150° C et une pression de 15 mm de mercure. On maintient ensuite ces conditions de traitement pendant une période d'une heure. On obtient alors une substance adhésive collante et visqueuse à chaud, dure et collante à froid; elle peut être diluée en toute proportion dans les solvants usuels.

Cette substance adhésive est utilisée comme composition de scellage pour les barquettes, après en avoir préparé une solution à 60 % dans le cyclohexane. Après enduction, séchage à l'air ambiant et pressage, on obtient des emballages dont les résultats de scellage et de conservation sont identiques à ceux des exemples précédents.

**Revendications**

1. Procédé d'emballage d'articles alimentaires et de plats cuisinés permettant d'assurer une longue conservation à température ambiante et consistant:

- à placer l'article alimentaire éventuellement cuisiné dans un récipient (1) dont les bords sont revêtus du côté à sceller d'une couche en matière thermoplastique (2) à base d'un film étiré ou non
- à déposer sur les bords du récipient et/ou du couvercle une composition transformable en un joint élastomérique (3) adhérent aux matières thermoplastiques
- à mettre en place le couvercle (4) au-dessus du récipient et à procéder à l'operculage sous l'effet d'une légère pression faisant adhérer le joint élastomérique avec le couvercle et le récipient

le procédé étant caractérisé en ce qu'on utilise, en tant que composition pour joint, une composition silicone adhérent aux matières thermoplastiques.

2. Procédé selon la revendication 1, dans lequel la composition silicone est une composition organopolysiloxanique monocomposante accélérée par un agent apportant ou libérant de l'eau.

3. Procédé selon la revendication 1, dans lequel la composition silicone est une composition organopolysiloxanique bicomposante réticulant par réaction de polyaddition (hydrosilylation) et comprenant un organopolysiloxane porteur de groupements insaturés et un organohydrogénopolysiloxane.

4. Procédé selon la revendication 1, dans lequel la composition silicone est une composition organopolysiloxanique durcissant par polycondensation contenant un polydiorganopolysiloxane α,ω dinydroxylé et un agent réticulant porteur de groupements alkoxyles et un catalyseur.

5. Procédé selon la revendication 1, dans lequel la composition silicone est une composition organopolysiloxanique adhésive par contact.

6. Procédé selon l'une des revendications précédentes, dans lequel le récipient est une barquette comprenant un fond, plusieurs côtés adjacents dressés par rapport au fond et formant une ceinture continue et un bord continu sensiblement parallèle au fond, le bord possédant éventuellement, notamment dans les angles, de petites irrégularités de surface.

7. Procédé selon l'une des revendications précédentes dans lequel le récipient est une barquette constituée à l'intérieur et sur ses bords par un revêtement thermoplastique alors que l'extérieur de la barquette est constitué par du carton.

8. Procédé selon l'une des revendications précédentes, dans lequel le récipient est constitué à l'intérieur et sur ses bords par un revêtement thermoplastique métallisé contrecollé par sa face métallisée sur un carton.

9. Procédé selon l'une des revendications précédentes, dans lequel le récipient est réalisé par emboutissage d'une feuille en matériau thermoplastique, éventuellement métallisée et contrecollée sur un carton.

10. Procédé selon l'une des revendications précédentes, dans lequel le revêtement thermoplastique est un film polyester éventuellement métallisé.

11. Procédé selon l'une des revendications précédentes, dans lequel le revêtement thermoplastique est un film de polytéréphtalate d'éthylène glycol éventuellement métallisé.

12. Articles constitués par un article alimentaire ou un plat cuisiné contenu dans un emballage tels qu'obtenus selon l'une des revendications 1 à 10.

**Patentansprüche**

1. Verpackungsverfahren für Nahrungsmittel und zubereitete Gerichte, welches eine lange Konservierung bei Umgebungstemperatur erlaubt, bestehend:
- im Einbringen des gegebenenfalls zubereiteten Nahrungsmittels in einen Behälter (1), dessen Ränder an der zu versiegelnden Seite mit einer Schicht aus thermoplastischem Material (2) auf Basis einer gestreckten oder nicht gestreckten Folie ausgekleidet sind,
- im Aufbringen auf die Ränder des Behälters und/oder des Deckels einer in eine an den thermoplastischen Materialien anhaftende elastomere Dichtung (3) umwandelbaren Verbindung,
- im Anbringen des Deckels (4) auf dem Behälter und im Verschließen unter Wirkung eines leichten Drucks, der die elastomere Dichtung mit dem Deckel und dem Behälter verkleben läßt,

welches Verfahren dadurch gekennzeichnet ist, daß man als Zusammensetzung für die Dichtung eine an thermoplastischen Materialien klebende Siliconverbindung verwendet.

2. Verfahren nach Anspruch 1, in welchem die Siliconverbindung eine aus einer Komponente bestehende Organopolysiloxanzusammensetzung mit einem Wasser liefernden oder freisetzenden Beschleuniger ist.

3. Verfahren nach Anspruch 1, worin die Siliconzusammensetzung eine aus zwei Komponenten gebildete Organopolysiloxanzusammensetzung ist, die durch Polyadditionsreaktion (Hydrosilylierung) vernetzt, und ein ungesättige Gruppen aufweisendes Organopolysiloxan und ein Organohydrogenpolysiloxan umfaßt.

4. Verfahren nach Anspruch 1, worin die Siliconzusammensetzung eine durch Polykondensation härtende Organopolysiloxanzusammensetzung ist, die ein α,ω-dihydroxiliertes Polydiorganopolysiloxan und ein Alkoxylgruppen aufweisendes Vernetzungsmittel sowie einen Katalysator enthält.

5. Verfahren nach Anspruch 1, worin die Siliconzusammensetzung eine durch Kontakt klebende Organopolysiloxanzusammensetzung ist.

6. Verfahren nach einem der vorstehenden Ansprüche, worin der Behälter ein kleines Gefäß ist, daß einen Boden, mehrere aneinandergrenzende Seiten, die bezüglich des Bodes aufgerichtet sind und eine durchgehende Umgrenzung bilden, und einen durchgehenden Rand im wesentlichen parallel zum Boden umfaßt, wobei der Rand gegebenenfalls, insbesondere in den Winkeln, kleine Oberflächenunregelmäßigkeiten aufweist.

7. Verfahren nach einem der vorstehenden Ansprüche, worin der Behälter ein kleines Gefäß ist, daß in seinem Inneren und auf seinen Rändern aus einer thermoplastischen Auskleidung besteht, während das äußere des kleinen Gefäßes aus Pappe besteht.

8. Verfahren nach einem der vorstehenden Ansprüche, worin der Behälter in seinem Inneren und seinen Rändern von einer metallierten thermoplastischen Auskleidung gebildet wird, die mit ihrer metallisierten Seite auf die Pappe geklebt ist.

9. Verfahren nach einem der vorstehenden Ansprüche, worin der Behälter durch Tiefziehen eines Bogens aus thermoplastischem Material, gegebenenfalls metallisiert und auf Pappe geklebt, realisiert wird.

10. Verfahren nach einem der vorstehenden Ansprüche, worin die thermoplastische Auskleidung eine gegebenenfalls metallisierte Polyesterfolie ist.

11. Verfahren nach einem der vorstehenden Ansprüche, worin die thermoplastische Auskleidung eine Folie aus gegebenenfalls metallisiertem Polyethylenglycolterephthalat ist.

12. Von einem Nahrungsmittel oder einem zubereiteten Gericht gebildete Gegenstände, enthalten in einer nach einem der Ansprüche 1 bis 10 erhaltenen Verpackung.

**Claims**

1. Process for packaging foodstuff articles and cooked dishes, by means of which preservation may be ensured for a long period at room temperature and which consists in:
- placing the foodstuff article, optionally cooked, in a container (1) whose edges are coated, on the side to be sealed, with a layer of thermoplastic material (2) based on a film which is drawn or not
- depositing on the edges of the container and/or of the lid a composition that can be converted to an elastomeric seal (3) which adheres to thermoplastic materials
- placing the lid (4) on top of the container and performing the closing operation by the effect of a light pressure, causing the elastomeric seal to adhere to the lid and the container.

The process being characterized in that, as a compostion for a seal, a silicone composition which adheres to thermoplastic materials is used.

2. Process according to claim 1, in which the silicone composition is a one-component organopolysiloxane composition accelerated by an agent which provides or releases water.

3. Process according to claim 1, in which the silicone composition is a two-component organopolysiloxane composition crosslinking by a polyaddition (hydrosilylation) reaction and comprising an organopolysiloxane bearing unsaturated groups and an organohydrogenopolysiloxane.

4. Process according to claim 1, in which the silicone composition is an organopolysiloxane composition

curing by polycondensation, containing an α,ω-dihydroxylated polydiorganopolysiloxane and a crosslinking agent bearing alkoxyl groups and a catalyst.

5. Process according to claim 1, in which the sit icone composition is an organopolysiloxane composition which adheres on contact.

6. Process according to one of the preceding claims, in which the container is a tray comprising a base, several adjacent sides raised with respect to the base and forming a continuous enclosure and a continuous edge substantially parallel to the base, the edge optionally possessing small surface irregularities, in particular in the corners.

7. Process according to one of the preceding claims, in which the container is a tray consisting of a thermoplastic coating on the inside and on its edges, while the outside of the tray consists of cardboard.

8. Process according to one of the preceding claims, in which the container consists, on the inside and on its edges, of a metallized thermoplastic coating laminated via its metallized face onto a cardboard.

9. Process according to one of the preceding claims, in which the container is made by stamping a sheet of thermoplastic material, optionally metallized and laminated onto a cardboard.

10. Process according to one of the preceding claims, in which the thermoplastic coating is a polyester film, optionally metallized.

11. Process according to one of the preceding claims, in which the thermoplastic coating is a film of polyethylene terephthalate, optionally metallized.

12. Articles consisting of a foodstuff article or a cooked dish contained in a pack, such as are obtained according to one of claims 1 to 10.

Fig. 1

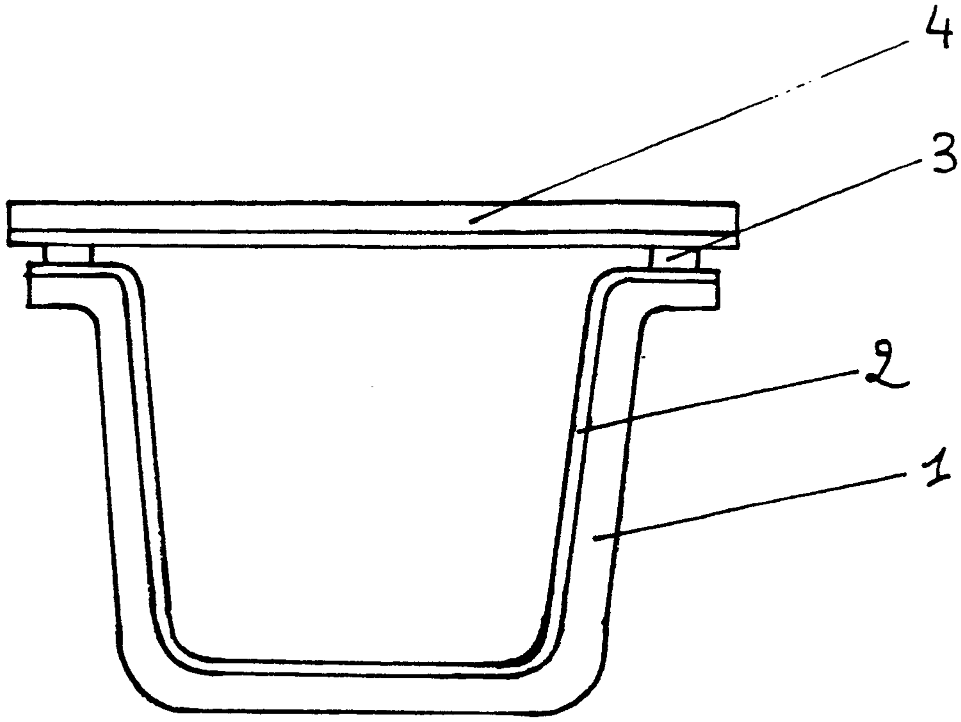


Fig. 2